# EUROPÄISCHE PATENTSCHRIFT

(11) **EP 0 978 230 B1**
(45) Veröffentlichungstag und Bekanntmachung des Hinweises auf die Patenterteilung: **08.01.2003**
(21) Anmeldenummer: 99113473.5
(22) Anmeldetag: 13.07.1999
(51) Int. Cl.: A01F 15/08, G01N 9/02

(54) **Verfahren und Vorrichtung zum Feststellen der Pressdichte von Ballen**
Method and device for determining the pressing density of bales
Méthode et dispositif pour déterminer la densité de pressage des balles

(30) Priorität: 04.08.1998 DE 19835166
(43) Veröffentlichungstag der Anmeldung: 09.02.2000
(73) Patentinhaber: Case Harvesting Systems GmbH, 01844 Neustadt (DE)
(72) Erfinder: Gottlöber, Dietrich, Dipl.-Ing., 01844 Neustadt (DE)
(74) Vertreter: Müller, Lutz

(56) Entgegenhaltungen:
- DE-A- 19 640 061
- DE-U- 29 511 023
- SU-A- 577 428
- US-A- 2 982 201
- US-A- 3 427 870
- US-A- 5 742 010

## Beschreibung

Die Erfindung betrifft ein Verfahren und eine Vorrichtung zum Feststellen der Preßdichte von Ballen in einer Ballenpresse, insbesondere in einer Großballenpresse zur Ernte land- und forstwirtschaftlicher Kulturen und sogenannter nachwachsender Rohstoffe, mit den Merkmalen nach den Oberbegriffen der Patentansprüche 1 und 11.

Von den zu verpressenden landwirtschaftlichen Erntegütern dient z. B. Stroh einmal als Düngergrundlage für landwirtschaftlich und gärtnerisch genutzte Flächen oder als Einstreu in der Tierhaltung. Zum anderen wird es heute auch in ganz erheblichem Maße einer industriellen Verwertung zur Herstellung anderweitiger Produkte, wie zum Beispiel für Verpackungsmaterial, Füllstoffe, Dämmstoffe etc. zugeführt.
Zunehmend werden auch Heu und Welkgut für die Bevorratung und für Silage zu Großballen verpreßt, die eine effektivere Bewirtschaftung in der Tierhaltung gestatten. Durch die Herstellung von quaderförmigen Großballen mit Hilfe von Großballenpressen können außerdem die vorhandenen Transportkapazitäten und die Lagerräume in den landwirtschaftlichen Betrieben rationeller und kostengünstiger genutzt werden. Dafür ist aber Bedingung, daß die Großballen auch annähernd die maximal mögliche Preßdichte aufweisen, die genannte Erntegüter vertragen. Aber auch aus der Sicht einer guten Silierfähigkeit hat die Einhaltung einer empfohlenen Preßdichte bei Welkgut beispielsweise einen hohen Stellenwert, da nur dann hochwertiges Silierfutter entsteht.
Im Stand der Technik ist mit der DE 38 20 367 C2 eine Großballenpresse bekannt geworden, die das Erntegut mittels einer Pick-up vom Boden aufnimmt und in den Arbeitsbereich eines nachgeordneten Rotorförderers bringt, der es durch einen Zuführkanal in den Preßkanal transportiert. Im Preßkanal führt ein von einem Kurbeltrieb angetriebener Preßkolben Hin- und Herbewegungen aus, wodurch er einen kontinuierlich nach hinten aus dem Preßkanal austretenden Strang aneinandergereihter Großballen erzeugt. Eine Bindeeinrichtung sorgt durch Umbinden der einzelnen Großballen mit mehreren nebeneinander liegenden Bindegarnschlaufen für einen festen Zusammenhalt Der Kurbeltrieb ist mit der Abtriebswelle des Hauptgetriebes der Großballenpresse verbunden, das über die Zapfwelle eines Traktors angetrieben wird. Das Hauptgetriebe stützt sich mit seinem Oberteil an einem Biegebalken ab, der an den Seitenwänden des Preßkanals befestigt ist. Das hintere Ende des Preßkanals wird durch verschwenkbare Seitenwände gebildet, deren Abstand zueinander mit einem hydraulischen Stellzylinder veränderbar ist. Bei einem kleinen Abstand der verschwenkbaren Seitenwände erhöht sich deren Anpreßkraft auf den betreffenden Großballen, so daß sich der Widerstand des Erntegutstranges zum Weiterschieben durch den Preßkanal erhöht. Dadurch muß der Preßkolben auch eine höhere Preßkraft aufbringen und die Folge davon ist schließlich eine höhere Preßdichte. Es ist selbstverständlich, daß sich bei weit geöffneten Seitenwänden die Verhältnisse ins Gegenteil umkehren. An der Frontwand des Preßkanals ist ein induktiver Lagesensor in einem geringen Abstand zum Biegebalken angeordnet, so daß dessen Ausgangssignal eine durch die Abstützung des Hauptgetriebes erfolgende Durchbiegung des Biegebalkens signalisiert und somit die vom Preßkolben über den Kurbeltrieb übertragene Preßkraft angibt. Dieses Meßsignal wird einerseits einem Verstärker und andererseits einem Schwellwertdiskriminator zugeführt. Das Ausgangssignal des Verstärkers geht geglättet an eine Summierschaltung und danach zusammen mit einem Sollsignal in einen Sollwertgeber.

Die dort gebildete Differenz geht als Regelsignal zu einem hydraulischen Steuermittel, das den Öldruck im hydraulischen Stellzylinder und damit den Abstand der verschwenkbaren Seitenwände des Preßkanals verändert.
Mit dieser Regeleinrichtung ist es zwar möglich, die Preßkraft einigermaßen konstant zu halten, einen Zahlenwert für die Preßdichte vermittelt sie aber nicht. Das kann sie deshalb nicht, weil zwischen der Größe der Preßkraft und der Preßdichte durch die unterschiedlichen Eigenschaften der verschiedenen Erntegutarten und zusätzlich noch durch deren augenblicklichen Feuchtigkeitsgehalt keine Proportionalität besteht. Damit kann der Bediener der Großballenpresse die Preßdichte anhand seiner Erfahrung lediglich einschätzen, was verständlicherweise oft sehr ungenau ist. Dadurch werden Transport- und Lagerkapazitäten ungenügend ausgenutzt und silierfähiges Erntegut verliert an Qualität.
Mit der EP 0 223 350 B1 und der EP 0 223 351 B1 ist eine weitere Großballenpresse bekannt geworden, deren Grundaufbau mit der nach der DE 38 20 367 C2 weitestgehend übereinstimmt. Hier weist der Kurbeltrieb zum Antrieb des Preßkolbens paarweise Kolbenstangen auf, die einenends mit den Kurbeln an der Ausgangswelle des Hauptgetriebes und anderenends mit am Preßkolben befestigten Kolbenbolzen gelenkig verbunden sind. An den Kolbenbolzen sind bei einer Ausführungsvariante Scherkraftmeßfühler in kreisringförmigen Ausnehmungen auf ihrer Außenseite angebracht und in einer anderen Ausführungsform sind es Biegekraftmeßfühler, die sich auf sehnenförmigen ebenen Abschnitten auf den Kolbenbolzen befinden. In beiden Fällen messen sie die vom Preßkolben aufzubringende Preßkraft direkt an der Stelle, wo sie auftreten.
Die Signalverarbeitung und die Regeleinrichtung zur Beeinflussung der Stellung der verschwenkbaren Seitenwände des Preßkanals sind funktionell analog wie bei der DE 38 20 367 C2, so daß darauf nicht näher eingegangen werden muß.

Damit ist auch diese Regeleinrichtung nicht in der Lage, dem Bediener der Großballenpresse Zahlenwerte für die Preßdichte zu liefern, so daß ihr die gleichen Nachteile wie vorstehend beschrieben anhaften.
Schließlich ist noch mit der DE 27 34 766 A1 eine Großballenpresse bekannt geworden, bei der wenigstens eine verschwenkbare Seitenwand am starren Teil des Preßkanals in Preßrichtung gesehen verschiebebeweglich angehangen ist. Dieser Verschiebeweg ist letztendlich auch nur ein Maß für die vom Preßkolben aufzubringende Preßkraft bei ganz bestimmten Reibungsverhältnissen zwischen dem Erntegut und dem Preßkanal selbst, wenn der Erntegutstrang hindurchgepreßt wird. Auch hier stellt das Meßsignal die Regeleinrichtung zur Beeinflussung der Stellung der verschwenkbaren Seitenwände so ein, daß ein vorgegebener Sollwert eingehalten wird. Eine Vermittlung der tatsächlichen Preßdichte ist auch mit diesem Prinzip nicht möglich.

Deshalb liegt der Erfindung die Aufgabe zugrunde, ein Verfahren und eine Vorrichtung zum Feststellen der Preßdichte von Ballen in einer Ballenpresse zu schaffen, die dem Betreiber die tatsächliche Preßdichte jedes Ballens exakt angibt, wodurch die Transport- und Lagerkapazitäten für die Ballen maximal ausgenutzt werden können und silierfähiges Erntegut mit der vorgeschriebenen Preßdichte zur Erzeugung höchster Qualität geerntet werden kann.
Diese Aufgabe wird durch die Verfahrensschritte nach dem Patentanspruch 1 und dem Gegenstand des vorrichtungsbezogenen Patentanspruches 7 gelöst, wobei in den darauf bezogenen Unteransprüchen Merkmale aufgeführt sind, die diese Lösung in vorteilhafter Weise weiterentwickeln und auf die hier deshalb ausdrücklich verwiesen wird. Durch das Messen der Gewichtskraft Gx für jeden einzelnen Ballen auf der Wegstrecke zwischen den Bindeinrichtungen bis zur Feldablage und das gleichzeitige Messen der Länge Lx dieser Ballen ist es möglich, mit den heute verfügbaren technischen Möglichkeiten die Preßdichte ζx für jeden einzelnen Ballen durch Quotientenbildung aus seiner Gewichtskraft Gx und seinem Volumen Vx bereits auf der Maschine während des Einsatzes ausrechnen zu lassen. Dabei ergibt sich Vx aus der feststehenden Querschnittsfläche des Preßkanals und dem Meßwert LX.
Es hat sich für den Bediener als zweckmäßig erwiesen, den Zahlenwert für die Preßdichte ζx für jeden Ballen von einer Anzeigeeinrichtung anzeigen zu lassen, damit er im Falle des Abweichens von der gewünschten Preßdichte ζx durch Veränderung der Stellung der verschwenkbaren Seitenwände des Preßkanals sofort korrigierend eingreifen kann. Darüber hinaus hat es sich bewährt, zusätzlich ständig den aktuellen Mittelwert ζₘᵢₜₜₑₗ über einen vorherbestimmbaren Zeitraum ausrechnen und anzeigen zu lassen. In einer vereinfachten Ausführungsform ist auch die Anzeige des Mittelwertes ζₘᵢₜₜₑₗ allein denkbar.
Bei geringfügig wechselnden Einsatzbedingungen kann es ausreichend sein, die Preßdichte ζx nur stichprobenartig zu verfolgen. Bei einer bevorzugten Ausführungsvariante zur Bestimmung der Preßdichte ζx werden die Gewichtskräfte Gx im Endbereich der Laderutsche mit einem Gewichtssensor gemessen, was zur Folge hat, daß beim Erreichen der Vorderfront jedes sich in der Vorwärtsbewegung befindenden Ballens von Null abweichende Meßwerte entstehen.
Diese Gewichtskraftwerte Gx steigen deutlich sichtbar mit dem Weiterrücken des gesamten Ballenstranges an, wobei das Hinzufügen jedes neuen Preßpaketes als Sprung in einer aus diesen Meßwerten aufgezeichneten Kurve zu sehen ist. Das steigert sich solange, bis sich der Schwerpunkt "S" jedes Ballens genau über dem Endbereich der Laderutsche befindet. In diesem Augenblick des Abkippens der Ballen drücken allein deren gesamte Gewichtskräfte Gx und evtl. vorhandene Beschleunigungskräfte auf den Endbereich, was auf direktem Wege durch den Gewichtssensor aufgenommen wird. Diese Gewichts-und Beschleunigungskräfte werden dann einem Mikroprozessor zugeführt, der ständig Mittelwerte Mx errechnet und speichert. Diese Mittelwerte Mx verkörpern den tatsächlichen Gewichtskraftverlauf, da sich die Beschleunigungswerte gegeneinander ausgleichen. Schließlich wird dann durch den Mikroprozessor der maximale Mittelwert Mxₘₐₓ jedes fertig gebundenen Ballens errechnet und gespeichert, was der tatsächlichen Gewichtskraft der Ballen entspricht. Der ersten Mittelwertbildung können noch weitere zur Erhöhung der Meßgenauigkeit folgen. Zum Messen der Gewichtskräfte Gx ist der Endbereich der Laderutsche über Biegeträger an ihren Seitenprofilen angeschlossen, die mit die Meßwerte liefernden Dehnmeßstreifen besetzt sind Es wird nur vorsorglich darauf hingewiesen, daß jede andere Art der Messung der Gewichtskräfte Gx auch im Rahmen der Erfindung liegt. Ebenso verhält es sich mit der konstruktiven Ausbildung der Laderutsche, die ebenso eine hinlänglich bekannte Rollenschurre sein kann. Schließlich ist diese Ausführungsvariante der Ballenpresse noch mit einem Lagesensor ausgestattet, der die Abweichungen der Ballenpresse aus der normalen Arbeitsposition infolge des Überfahrens von Bodenunebenheiten aufnimmt und daraus resultierende Meßwertverfälschungen für die Gewichtskräfte Gx dem Mikroprozessor zur Korrektur zuleitet.
Zur Messung der Länge Lx der Ballen ist ein Meßaufnehmer an der Laderutsche angeordnet, der die Länge der einzelnen Ballen bzw. des Ballenstranges außerhalb des Preßkanals mißt, wo sie bereits expandiert sind und dadurch ihre endgültige Länge besitzen. Wie auch bei der Messung der Gewichtskräfte Gx ist es bei der Messung der Länge Lx unerheblich, ob der Meßaufnehmer an einer Laderutsche oder an einer Rollenschurre angebracht ist. Ebenso verhält es sich mit dem Ort der Anbringung des Meßaufnehmers innerhalb der Laderutsche, d. h. ob er in deren Vorderteil, in der Mitte oder an der Abkippkante angeordnet ist.
In der hier bevorzugten Ausführungsvariante ist er konzentrisch in die letzte Rolle der Rollenschurre eingebaut. Er besteht aus zwei voneinander beabstandeten Meßeinrichtungen, die unabhängig voneinander messen, wodurch unterschiedliche Längen Lx der einzelnen Ballen über ihre Breite festgestellt werden können. Jeder Meßaufnehmer besteht aus einem großen Sternrad und einem kleineren Zählrad, die konzentrisch zueinander angeordnet und fest miteinander verbunden sind. Das große Sternrad ist dabei mit seinen Zacken mit den Ballen bzw. dem Ballenstrang im Eingriff und ermittelt dadurch deren Vorschubweg. Diesen überträgt es an das Zählrad, das am Umfang gleichmäßig verteilte Aussparungen besitzt. Im Bereich dieser Aussparungen ist ein lagefixierter Sensor befestigt, der die Anzahl der sich vorbeibewegenden Aussparungen zählt. Zur Erhöhung der Meßgenauigkeit ist die Anzahl der Aussparungen des Zählrades wesentlich größer als die Anzahl der Zacken des Sternrades. Die so gemessene Länge Lx wird dem Mikroprozessor zur weiteren Verarbeitung zugeführt. Durch die Verbindung des Mikroprozessors mit der Anzeigeeinrichtung können sowohl die Längen Lx für jeden Ballen nacheinander und die Länge des gesamten Ballenstranges ab einem vorherbestimmbaren Zeitpunkt angezeigt werden. Analog verhält es sich mit der Anzeige der Gewichtskräfte Gx für den einzelnen Ballen bzw. den Ballenstrang.
Die Vorteile dieses erfindungsgemäßen Verfahrens und der Vorrichtung sind, daß im Vergleich zum vorbekannten Stand der Technik dem Betreiber einer derartigen Ballenpresse erstmalig die tatsächlichen Werte der Preßdichte ζx vermittelt werden, was einmal eine maximale Ausnutzung von Transport- und Lagerkapazitäten für die Ballen gewährleistet und im Falle beabsichtigter Silierung durch die Einhaltung der dafür günstigsten Preßdichte ζx eine hohe Futterqualität sichert.
Darüber hinaus ist noch die Exaktheit der Werte für die Preßdichte ζx als Vorteil zu erwähnen, da die Gewichtskräfte Gx und die Längen Lx für sich gesehen mit erfindungsgemäßen Lösungen ermittelt werden. Das Messen der Gewichtskräfte Gx erfolgt hiermit erstmalig durch alleiniges Wiegen der Ballen ohne igendwelche zusätzlichen Baugruppen bzw. sogar der gesamten Ballenpresse und die Messung der Längen Lx ebenfalls erstmalig unverfälscht im expandierten Zustand der Ballen.
Abschließend wird hiermit zum beanspruchten Schutzumfang dieses erfindungsgemäßen Verfahrens und der Vorrichtung zum Feststellen der Preßdichte klargestellt, daß der Rahmen der Erfindung mit der Anwendung anderer Lösungen zur Ermittlung der Gewichtskräfte Gx bzw. zum Messen der Längen Lx nicht verlassen wird. Letztendlich ist nur entscheidend, daß Gx und Lx irgendwo und irgendwie innerhalb der Ballenpresse einschließlich einer dem Preßkanal nachgeordneten Laderutsche ermittelt werden. Außerdem sind vom Schutzumfang auch solche Lösungen betroffen, wenn Gx und Lx an unterschiedlichen Stellen gemessen werden, da es dann nur auf die richtige Zuordnung der gemessenen Länge Lx und der Gewichtskraft Gx für den gleichen Ballen ankommt, wozu es mehrere Möglichkeiten gibt.

Die Erfindung soll nun anhand von zwei Ausführungsbeispielen näher erläutert werden, wobei die einzelnen Figuren zeigen:
- Fig. 1:: eine Seitenansicht einer Ballenpresse mit einem Ballen auf der Rollenschurre im Augenblick der Wägung seiner maximalen Gewichtskraft mit einem in deren Endbereich angeordneten Gewichtssensor und einem an gleicher Stelle angebrachten Meßaufnehmer zum Messen seiner Länge
- Fig. 2:: eine vergrößerte Darstellung der Rollenschurre nach Fig. 1
- Fig. 3:: eine vergrößerte Darstellung der Rollenschurre mit dem Gewichtssensor im Endbereich und dem Meßaufnehmer im Vorderteil

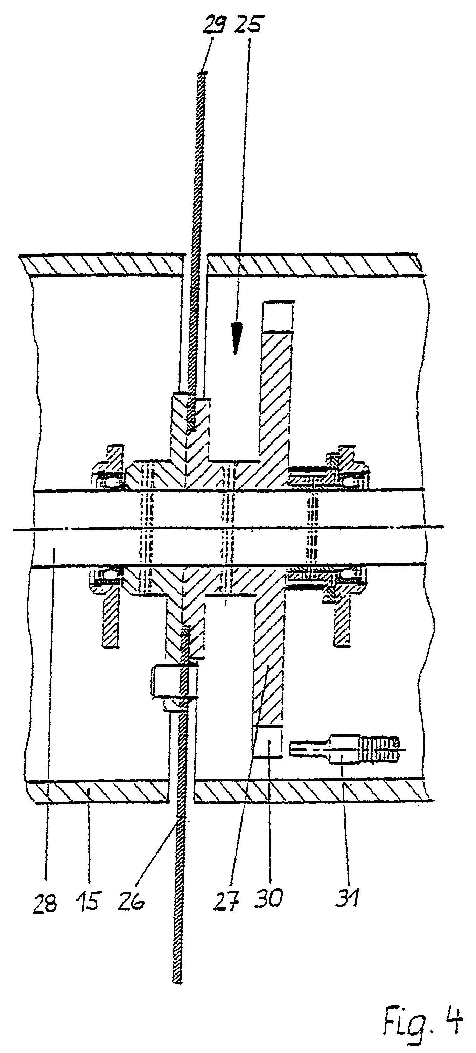

- Fig. 4:: einen Schnitt durch den Meßaufnehmer nach Fig. 2
- Fig. 5:: einen Meßschrieb mit den Kurven der Gewichtskräfte Gx und der errechneten Mittelwerte Mx während der Vorwärtsbewegung eines Ballens auf der Rollenschurre vom Auftreffen seines vorderen Endes auf deren Endbereich bis zur Ablage auf dem Feld.

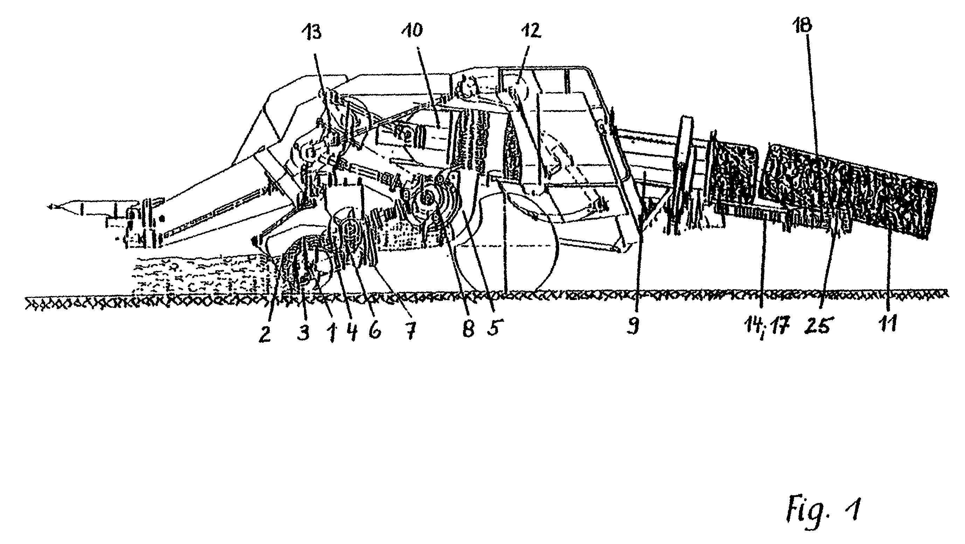

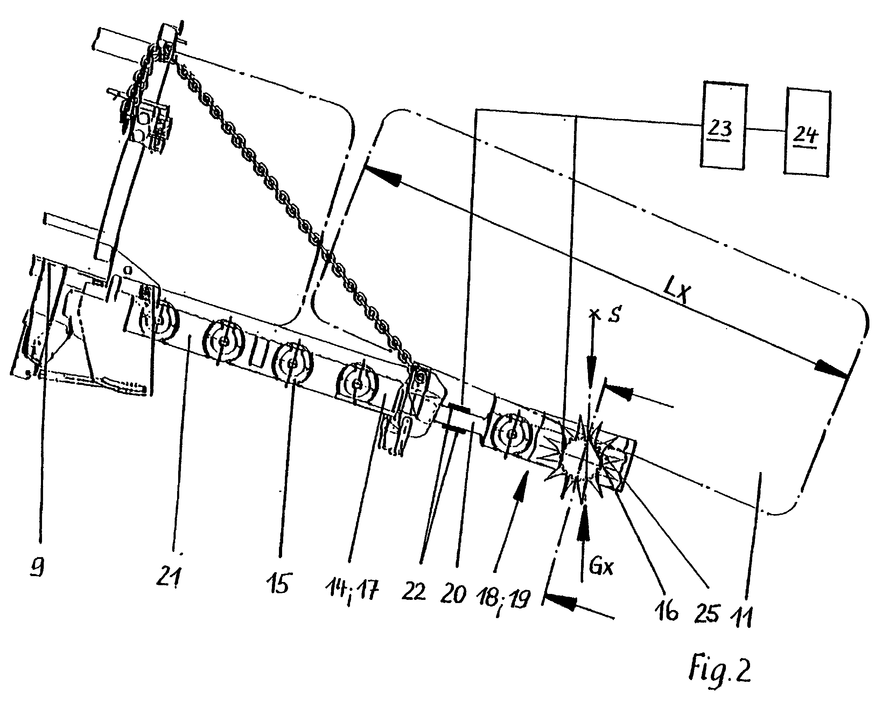

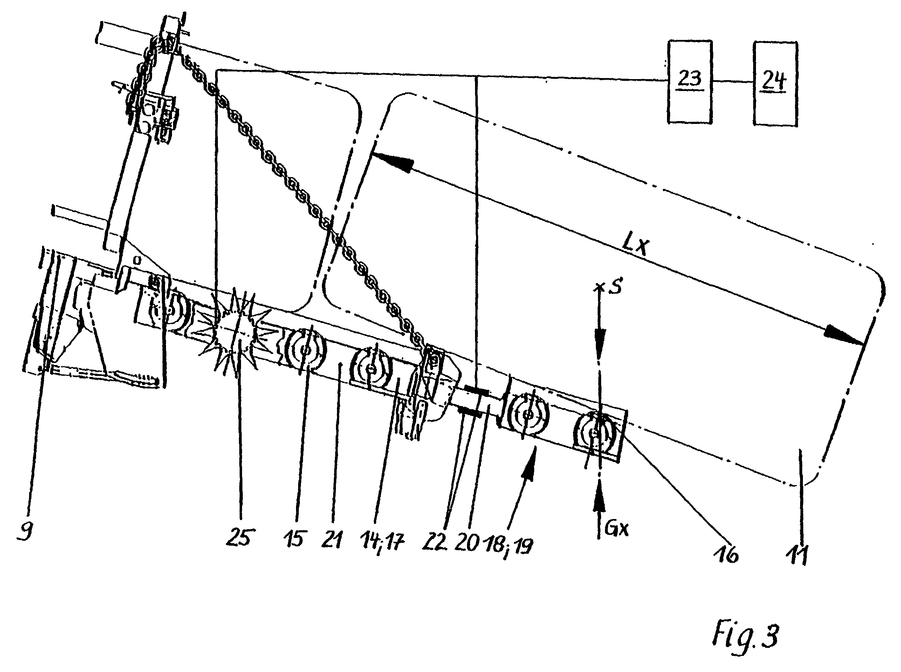

In Figur 1 ist eine Ballenpresse in der Seitenansicht mit teilweise weggelassener Verkleidung zum Erkennen der wichtigsten Funktionsorgane gezeigt. Sie ist an ihrer Frontseite mit einer breiten Pick-up 1 ausgestattet, die das im Schwad liegende Erntegut mit ihren Zinken 2 vom Erdboden aufnimmt, wobei sie mit Laufrädern 3 geführt wird. Über und hinter ihr ist links und rechts je ein Querförderschneckenstück 4 zum Zusammenführen des Erntegutes auf die Breite des nachfolgenden Zuführkanals 5 angeordnet. In diesem Bereich befindet sich noch ein Schneidrotor 6, der mit einschwenkbaren Schneidmessern 7 zusammenarbeitet, um das Erntegut in Stücke zu schneiden. Der Zuführkanal 5 wird von einem Förderrotor 8 mit Erntegut befüllt und danach in einem Hub in den Preßkanal 9 entleert. Dort wird es durch den Preßkolben 10 im Strangpreßverfahren zu Ballen 11 verpreßt, die durch eine Bindeeinrichtung 12 mit mehreren Lagen Bindegarn zusammengebunden werden. Der Antrieb sämtlicher Funktionsorgane erfolgt von einem Hauptgetriebe 13 aus, das vom Zapfwellenanschluß eines nicht dargestellten Traktors aus angetrieben wird.
An das hintere Ende des Preßkanals 9 ist eine Rollenschurre 14 so angebaut, daß sie die Verlängerung des Bodens des Preßkanals 9 darstellt. Die Ballen 11 werden von den Rollen 15 der Rollenschurre 14 solange getragen, bis sie durch Abkippen über die als Abkippkante 16 dienende letzte Rolle 15 auf das Feld fallen. Die Rollenschurre 14 könnte auch problemlos durch eine aus Profilen bestehende Laderutsche 17 ersetzt werden, ohne daß das negative Auswirkungen auf das Messen der Gewichtskräfte Gx bzw. der Länge Lx der Ballen haben würde.
Zur Ermittlung der Gewichtskräfte Gx ist in den Figuren 2 und 3 eine mögliche Ausführungsform eines Gewichtssensors zu sehen, wobei der Endbereich 19 der Rollenschurre 14 beidseitig über Biegeträger 20 an deren Seitenprofilen 21 befestigt ist. An ihnen sind Dehnmeßstreifen 22 zur Ermittlung der Durchbiegung unter der Einwirkung der Gewichtskräfte Gx vorgesehen.
Die Meßwerte der Gewichtskräfte Gx werden einem schematisch dargestellten Mikroprozessor 23 zugeleitet, der sich bei einer gezogenen Ballenpresse in der Traktorkabine und bei einer selbstfahrenden Ballenpresse in deren Fahrerhaus befinden sollte. Der Mikroprozessor 23 ist mit einer ebenfalls in den Figuren 2 und 3 schematisch dargestellten Anzeigeeinrichtung 24 verbunden.

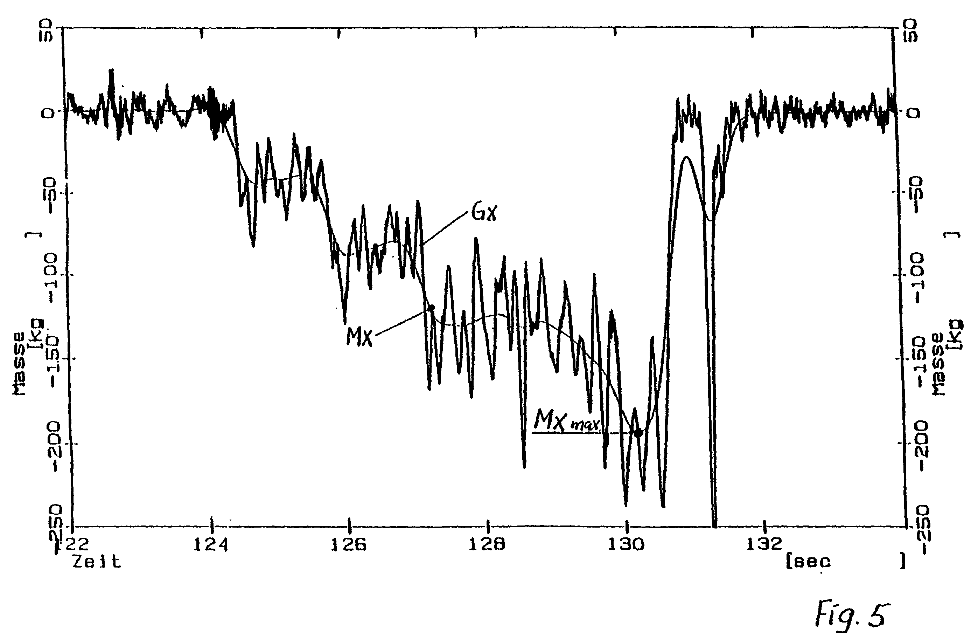

In Figur 5 ist einmal der Kurvenverlauf der sich durch äußere Einflüsse ändernde Gewichtskraftverlauf Gx aufgetragen. Genannter Mikroprozessor 23errechnet daraus dann die Mittelwerte Mx, wobei der Mittelwert Mxₘₐₓ der tatsächlichen Gewichtskraft eines fertigen Ballens 11 entspricht. Sowohl jeder die tatsächliche Gewichtskraft eines Ballens 11 verkörpernde maximale Mittelwert Mxₘₐₓ als auch deren Summe können über eine vorwählbare Zeitperiode auf der Anzeigeeinrichtung 24 abgelesen werden.
Zum Messen der Länge Lx bieten sich unter anderem zwei Ausführungsvarianten an, die ebenfalls in den Figuren 2 und 3 vergrößert dargestellt sind. Danach befindet sich der Meßaufnehmer 25 in Figur 2 im Bereich der Abkippkante 16 der Rollenschurre 14 und in Figur 3 in ihrem sich unmittelbar an den Boden des Preßkanals 9 anschließenden Vorderteil.
Vom konstruktiven Aufbau sind die Meßaufnehmer 25 beider Ausführungsbeispiele gleich. Dabei ist der aus einem Sternrad 29 und einem Zählrad 27 bestehende Meßaufnehmer 25 auf die Welle 28 einer Rolle 15 gesteckt. Das Sternrad 26 und das Zählrad 27 können entweder beide mit der Welle 28 verdrehsicher verbunden sein oder sie sind auf dieser drehbar gelagert und miteinander verbunden. Das Sternrad 26 überragt mit seinen Zacken 29 die Rolle 15 zum Zwekke des Eingriffes in den Ballen 11. Das Zählrad 27 ist dagegen innerhalb des Mantels der Rolle 15 angebracht. Es weist gleichmäßig an seinem Umfang verteilte Aussparungen 30 auf, deren Anzahl größer als die der Zacken 29 ist. Im Bereich der Aussparungen 30 befindet sich ein lagefixierter Sensor 31 zum Zählen der Aussparungen 30.

Die Preßdichte ζ*x* errechnet und speichert der Mikroprozessor 23 durch Quotientenbildung aus dem die tatsächliche Gewichtskraft verkörpernden maximalen Mittelwert Mxₘₐₓ und seinem Volumen Vx, wobei Vx das Produkt aus dem Querschnitt des Preßkanals 9 und der Länge Lx des betreffenden Ballens 11 ist. Sowohl die gemessenen Gewichtswerte als auch die Längenwerte und auch die Preßdichtenwerte kann die Anzeigeeinrichtung 24 einzeln für jeden Ballen 11, kumulativ oder als Durchschnittswerte über eine vorwählbare Zeitperiode anzeigen.

### Bezugszeichenaufstellung

- 1: Pick-up
- 2: Zinken
- 3: Laufrad
- 4: Querförderschneckenstück
- 5: Zuführkanal
- 6: Schneidrotor
- 7: Schneidmesser
- 8: Förderrotor
- 9: Preßkanal
- 10: Preßkolben
- 11: Ballen
- 12: Bindeeinrichtung
- 13: Hauptgetriebe
- 14: Rollenschurre
- 15: Rolle
- 16: Abkippkante
- 17: Laderutsche
- 18: Gewichtssensor
- 19: Endbereich
- 20: Biegeträger
- 21: Seitenprofile
- 22: Dehnmeßstreifen
- 23: Mikroprozessor
- 24: Anzeigeeinrichtung
- 25: Meßaufnehmer
- 26: Sternrad
- 27: Zählrad
- 28: Welle
- 29: Zacken
- 30: Aussparung
- 31: Sensor

- Gx: Gewichtskraft (Ballen)
- Lx: Länge (Ballen)
- ζx: Preßdichte (Ballen)
- Vx: Volumen (Ballen)
- ζxₘᵢₜₜₑₗ: Mittelwert (Preßdichte ζx)
- Mx: Mittelwert (Gewichtskraft Gx)
- Mxₘₐₓ: maximaler Mittelwert

## Patentansprüche

1. Verfahren zum Feststellen der Preßdichte von Ballen in einer Ballenpresse, insbesondere einer Großballenpresse zur Herstellung quaderförmiger Ballen aus landwirtschaftlichen Erntegütern, wobei das Verfahren durch folgende Schritte gekennzeichnet ist:
a) Messen der Gewichtskräfte (Gx) jedes einzelnen Ballens (11) auf der Wegstrecke von der Bindeeinrichtung (12) bis zum Verlassen der Ballenpresse bzw. einer deren Preßkanal (9) nachgeordneten Laderutsche (17),
b) Messen der Länge (Lx) jedes gewogenen Ballens (11) mit einem den Vorschubweg erfassenden Meßaufnehmer (25) auf der Wegstrecke von der Bindeeinrichtung (12) bis zum Verlassen der Ballenpresse bzw. einer deren Preßkanal (9) nachgeordneten Laderutsche (17),
c) Errechnung der Werte der Preßdichte (ζ*x*) für jeden einzelnen Ballen (11) durch Quotientenbildung aus seiner Gewichtskraft (Gx) und seinem Volumen (Vx), das aus dem Produkt des Querschnitts des Preßkanals (9) und dem Meßwert für seine Länge (Lx) errechnet wird.

2. Verfahren nach Anspruch 1, **dadurch gekennzeichnet, daß** die Preßdichten (ζx) für jeden neu gebildeten Ballen (11) und/oder ein aktueller Mittelwert (ζxₘᵢₜₜₑₗ) für alle ab einem vorbestimmbaren Zeitpunkt gebildeten Ballen (11) errechnet und einer Anzeigeeinrichtung (24) zugeführt werden.

3. Verfahren nach Anspruch 1, **dadurch gekennzeichnet, daß** die Preßdichten (ζx) für stichprobenartig ausgewählte Ballen (11) errechnet und daraus ein aktueller Mittelwert (ζxₘᵢₜₜₑₗ) ab einem vorbestimmbaren Zeitpunkt gebildet und einer Anzeigeeinrichtung (24) zugeführt werden.

4. Verfahren nach den Ansprüchen 1 bis 3, **gekennzeichnet durch** die Verfahrensschritte:
a) kontinuierliches Messen der von den Ballen (11) auf den Endbereich (19) einer unmittelbar an das Ende des Preßkanals (9) angeschlossenen Laderutsche (17) einwirkenden Gewichtskräfte (Gx) mittels Gewichtssensor (18) während ihrer Vorwärtsbewegung auf der Laderutsche (17) bis zu deren Verlassen,
b) kontinuierliche Zuführung der Meßwerte der Gewichtskräfte (Gx) an einen Mikroprozessor (23) zur Errechnung und Speicherung der Mittelwerte (Mx) für die Gewichtskräfte (Gx),
c) Errechnung und Speicherung der maximalen Mittelwerte (Mxₘₐₓ) als Maß für die tatsächliche Gewichtskraft jedes fertig gebundenen Ballens (11),
d) Messen der Längen (Lx) jedes gewogenen Ballens (11) mit einem dem deren Vorschubweg erfassenden Meßaufnehmer (25) auf einer dem Preßkanal (9) nachgeordneten Laderutsche (17) und Zuführung dieser Meßwerte an einen Mikroprozessor (23),
e) Errechnung der Werte der Preßdichte (ζx) **durch** den Mikroprozessor (23) für jeden gewogenen Ballen (11) **durch** Quotientenbildung aus seinem maximalen Mittelwert (Mxₘₐₓ) und seinem Volumen (Vx), das aus dem Produkt des Querschnitts des Preßkanals (9) und dem Meßwert für seine Länge (Lx) errechnet wird.

5. Verfahren nach den Ansprüchen 1 bis 4, **dadurch gekennzeichnet, daß** die tatsächlichen Gewichtskräfte für jeden Ballen (11) durch wenigstens zweifach nacheinander durchgeführter Errechnung und Speicherung der Mittelwerte (z. B. Mx', Mx", Mx''') sowie deren Maxima (Mx'ₘₐₓ, Mx"ₘₐₓ, Mx'''ₘₐₓ) festgestellt wird.

6. Verfahren nach den Ansprüchen 1 bis 5, **dadurch gekennzeichnet, daß** die Gewichtskräfte (Gx) direkt an der Abkippkante (16) im Endbereich (19) der Laderutsche (17) gemessen werden.

7. Verfahren nach den Ansprüchen 1 bis 6, **dadurch gekennzeichnet, daß** der Gewichtssensor (18) die Gewichtskräfte (Gx) in der normalen Arbeitsposition der Ballenpresse in einer vertikalen Ausrichtung als die tatsächlichen Gewichtskräfte (Gx) mißt und daß beim Abweichen der Ballenpresse aus dieser normalen Arbeitsposition ein Lagesensor auf die Umrechnung der dadurch verfälschten Meßwerte im Mikroprozessor (23) in die tatsächlichen Gewichtskräfte (Gx) Einfluß nimmt.

8. Verfahren nach den Ansprüchen 1 bis 7, **dadurch gekennzeichnet, daß** die Messung der vom Ballen (11) auf den Endbereich (19) der Laderutsche (17) einwirkenden Gewichtskräfte (Gx) zeitlich limitiert in einen Bereich etwas vor und nach Erreichen des maximalen Mittelwertes (Mxₘₐₓ) durchgeführt wird.

9. Verfahren nach den Ansprüchen 1 bis 8, **dadurch gekennzeichnet, daß** die einzelnen maximalen Mittelwerte (Mxₘₐₓ) und/oder deren Summe in einer vom Bediener zu bestimmenden Zeitperiode einer Anzeigeeinrichtung (24) zugeführt werden.

10. Verfahren nach den Ansprüchen 1 bis 4, **dadurch gekennzeichnet, daß** die Längen (Lx) jedes einzelnen Ballens (11) und/oder deren Summe in einer vom Bediener zu bestimmenden Zeitperiode einer Anzeigeeinrichtung (24) zugeführt werden.

11. Vorrichtung zum Feststellen der Preßdichte von Ballen in einer Ballenpresse, insbesondere einer Großballenpresse zur Herstellung quaderförmiger Ballen aus landwirtschaftlichen Erntegütern, **dadurch gekennzeichnet, daß**
a) im Endbereich (19) einer am hinteren Ende des Preßkanals (9) angebrachten und die Verlängerung seines Bodens darstellenden Laderutsche (17) ein die Gewichtskräfte (Gx) der sich in die Ablageposition bewegenden Ballen (11) messender Gewichtssensor (18) angeordnet ist.
b) der Gewichtssensor (18) mit einem aus den Gewichtskräften (Gx) ständig Mittelwerte (Mx) errechnenden, diese Mittelwerte (Mx) speichernden und den maximalen Mittelwert (Mxₘₐₓ) feststellenden Mikroprozessor (23) verbunden ist,
c) an der Laderutsche (17) ein den Vorschubweg und damit die Länge (Lx) der sich in die Ablageposition bewegenden Ballen (11) messender Meßaufnehmer (25) angeordnet ist, der zur Übermittlung dieser Meßwerte mit dem Mikroprozessor (23) verbunden ist,
d) der die Meßwerte des Gewichtssensors (18) und des Meßaufnehmers (25) aufnehmende Mikroprozessor (23) außerdem zur Errechnung der Werte der Preßdichte (ζx) für die gewogenen Ballen (11) durch Quotientenbildung aus deren maximalem Mittelwert (Mxₘₐₓ) und dem dazugehörigen Volumen (Vx), wobei (Vx) das Produkt aus dem Querschnitt des Preßkanals (9) und dem Meßwert der Länge (Lx) des betreffenden Ballens (11) ist, vorgesehen ist.

12. Vorrichtung nach Anspruch 11, **dadurch gekennzeichnet, daß** der Endbereich der Laderutsche (17) über mit Dehnmeßstreifen (22) besetzte Biegeträger (20) an der Laderutsche (17) befestigt ist.

13. Vorrichtung nach den Ansprüchen 11 und 12, **dadurch gekennzeichnet, daß** die Laderutsche (17) als Rollenschurre (14) ausgebildet ist.

14. Vorrichtung nach den Ansprüchen 11 bis 13, **dadurch gekennzeichnet, daß** der Endbereich (19) der Rollenschurre (14) wenigstens mit einer Rolle (15) ausgestattet ist.

15. Vorrichtung nach den Ansprüchen 11 bis 14, **dadurch gekennzeichnet, daß** der Meßaufnehmer (25) an der Laderutsche (17) oder der Ballenschurre (14) in einem sich unmittelbar an den Boden des Preßkanals (9) anschließenden Bereich angeordnet ist.

16. Vorrichtung nach den Ansprüchen 11 bis 14, **dadurch gekennzeichnet, daß** der Meßaufnehmer (25) im Bereich der Abkippkante (16) der Rollenschurre (14) bzw. der Laderutsche (17) angeordnet ist.

17. Meßvorrichtung nach den Ansprüchen 11 bis 16, **dadurch gekennzeichnet, daß** der Meßaufnehmer (25) konzentrisch an einer Rolle (15) der Rollenschurre (14) angeordnet ist.

18. Meßvorrichtung nach den Ansprüchen 11 bis 17, **dadurch gekennzeichnet, daß** an der Rollenschurre (14) bzw. der Laderutsche (17) wenigstens zwei voneinander beabstandet angeordnete und den Ballen (11) in seiner Breite unabhängig voneinander abtastende Meßaufnehmer (25) vorgesehen sind.

19. Meßvorrichtung nach den Ansprüchen 11 bis 18, **dadurch gekennzeichnet, daß** der Meßaufnehmer (25) aus einem Sternrad (26) und einem Zählrad (27) besteht, die verdrehsicher miteinander verbunden sind.

20. Meßvorrichtung nach den Ansprüchen 11 bis 19, **dadurch gekennzeichnet, daß** das Zählrad (27) gleichmäßig am Umfang verteilte Aussparungen (30) aufweist, deren Anzahl größer als die Anzahl der Zacken (29) des Sternrades (26) ist.

21. Meßvorrichtung nach den Ansprüchen 11 bis 20, **dadurch gekennzeichnet, daß** dem Zählrad (27) im Bereich der Aussparungen (30) ein lagefixierter Sensor (31) zum Zählen der Aussparungen (30) zugeordnet ist.

22. Meßvorrichtung nach den Ansprüchen 11 bis 21, **dadurch gekennzeichnet, daß** der Meßaufnehmer (25) mit einer die Länge des gerade auf dem Feld abgelegten Ballens (11) und/oder die aktuelle Länge des Ballenstranges von einem vorbestimmbaren Zeitpunkt an anzeigenden Anzeigeeinrichtung (24) verbunden ist.

## Claims

1. A method for determining the density after pressing of bales in a baling press, in particular a press for large bales for making bales in a rectangular shape made from harvested agricultural products, the method being **characterised by** the following stages:
a) Measurement of the weight (Gx) of each bale separately (11) on the section between the binding device (12) and the start of the baling press or a loading chute (17) fitted behind its pressing channel (9).
b) Measurement of the length (Lx) of each bale weighed (11) with a measuring sensor (25) taking the length of the movement over the section situated between the binding device (12) and the beginning of the baling press or a loading chute (17) fitted behind its pressing channel (9).
d) Calculation of the values of the density after pressing (ζx) for each bale separately (11) by the formation of a quotient from its weight (Gx) and its volume (Vx), which is calculated from the product of the section of the pressing channel (9) and the measured value for its length (Lx).

2. A method according to Claim 1, **characterised in that** the densities after pressing (ζx), for each new bale formed (11) and/or actual mean value (ζx ₘₑₐₙ) are calculated for all the bales formed (11) from a predetermined time and given out on a display device (24).

3. A method according to Claim 1, **characterised in that** the densities after pressing (ζx) are calculated for the bales (11) chosen by spot check and an actual mean value (ζx ₘₑₐₙ) is formed from a predetermined time and given out on a display device(24).

4. A method according to Claims 1 to 3, **characterised by** the following method stages:
a) Continuous measurement of the weights (Gx) through the intermediary of the bales (11) on the end section (19) of a loading chute (17) connected immediately to the end of the pressing channel (9) by means of a weight detector (18) during their advance over the loading chute (17) up to their deposit.
b) Continuous transmission of the measured weight values (Gx) to a microprocessor (23) for the calculation and storage of the mean values (Mx) for the weight (Gx).
c) Calculation and storage of the maximum mean values (Mxₘₐₓ) as a measurement for the actual weight of each bale (11) in a definitive way.
d) Measurement of the lengths (Lx) of each bale weighed (11) with a measurement sensor (25) detecting their movement on a loading chute (17) placed behind the pressing channel (19) and sending these measured values to a microprocessor (23).
e) Calculation of the values of the density after pressing (ζx) by the microprocessor (23) for each bale weighed (11) by the formation of a quotient from its maximum mean value (Mxₘₐₓ) and from its volume (Vx), which is calculated from the product of the section of the pressing channel (9) and of the measured value for its length (Lx).

5. A method according to Claims 1 to 4, **characterised in that** the real weight for each bale (11) is defined by at least two calculations carried out one after the other and a storage of the measured values (e.g. Mx', Mx'', Mx'''), the same for their maximum (Mx'ₘₐₓ, Mx''ₘₐₓ, Mx'''ₘₐₓ).

6. A method according to Claims 1 to 5, **characterised in that** the weight (Gx) is measured directly on the tipping edge (16) in the end section (19) of the loading chute (17).

7. A method according to Claims 1 to 6, **characterised in that** the weight detector (18) measures the weight (Gx) in the normal working position of the baling press which is a vertical direction as an actual weight (Gx) and in the case where the baling press is in a different position to this normal working position, a position detector influences the conversion of the now incorrect measured values in the microprocessor (23) to give the actual weight (Gx).

8. A method according to claims 1 to 7, **characterised in that** the measurement of the weight (Gx) through the intermediary of the bale (11) on the end section (19) of the loading chute (17) is limited in time to an area situated slightly in front and is carried out after the maximum mean value (Mxₘₐₓ) is reached.

9. A method according to claims 1 to 8 **characterised in that** the different maximum mean values (Mxₘₐₓ) and/or their sum are fed, during a period defined by the operator, to a display device (24).

10. A method according to claims 1 to 4, **characterised in that** the lengths (Lx) of each separate bale (11) and/or their sum are fed, during a period to be determined by the operator, to a display device (24).

11. A device for determining the density after pressing of bales in a baling press, in particular in a press for large bales to make bales in a rectangular shape from harvested agricultural crops, **characterised in that**
a) in the end section (19) of a loading chute (17) fitted at the rear extremity of the pressing channel (9) and being an extension of its floor, a weight detector (18) measuring the weight (Gx) of the bales which move from the loading to the unloading position;
b) the weight detector (18) is connected to a microprocessor which constantly calculates the mean values (Mx) from the weight (Mxₘₐₓ), stores these mean values (Mx) and determines the maximum mean value (Mxₘₐₓ);
c) a measurement sensor (25) which measures the movement and therefore the length (Lx) of the bales (11) moving to the loading and unloading position on the loading chute (17), the aforementioned sensor being connected to the microprocessor (23) for the transmission of these measured values;
d) the microprocessor (23) which records the measured values of the weight detector (18) and of the measuring sensor (25) is also provided for the calculation of the values of density after pressing (ζx) for the weighed bales (11) by formation of a quotient from its maximum mean value (Mxₘₐₓ) and from the corresponding volume (Vx), (Vx) being the product of the section of the pressing channel (9) and of the value of the measurement of length (Lx0 of the bale concerned (11).

12. A device according to claim 11, **characterised in that** the end section of the loading chute (17) is fixed to the loading chute (17) by means of flexurally elastic beams (20) fitted with strain gauges (22).

13. A device according to claims 11 and 12, **characterised in that** the loading chute (17) is in the form of a roller chute (14).

14. A device according to claims 11 to 13, **characterised in that** the end section (19) of the roller chute (14) is fitted with at least one roller (15).

15. A device according to claims 11 to 14, **characterised in that** the measuring sensor (25) is fitted on the loading chute (17) or the roller chute (14) in an area which directly adjoins the floor of the pressing channel (9).

16. A device according to claims 11 to 14, **characterised in that** the measuring sensor (25) is fitted in the area of the tipping edge (16) of the roller chute (14) or the loading chute (17).

17. A device according to claims 11 to 16, **characterised in that** the measuring sensor (25) is fitted concentrically on a roller (15) of the roller chute (14).

18. A measuring device according to claims 11 to 17, **characterised in that** on the roller chute (14) or the loading chute (17) at least two measuring sensors , fitted at a distance from each other and sensing the bales (11) over their length independently of each other, are provided.

19. A measuring device according to claims 11 to 18, **characterised in that** the measuring sensor (24) is made up of a star-wheel (26) and a counting wheel (27) which are connected so that they can both rotate.

20. A measuring device according to claims 11 to 19, **characterised in that** the counter wheel (27) has notches (30) uniformly fitted on its outside edge and the number of which is higher than the number of teeth (29) on the star-wheel (26).

21. A measuring device according to claims 11 to 20, **characterised in that** a detector (31) at a fixed position is fitted on the counter wheel (27) in the area of the notches (30) for counting the notches (30).

22. A measuring device according to claims 11 to 21, **characterised in that** the measuring sensor (25) is connected to a display device (24) which shows the length of the bale (11) which has just been deposited on the field and/or the actual length of a string of bales from a predetermined time setting.

## Revendications

1. Dispositif pour la détermination de la densité après compression de balles dans une presse-balloteuse, en particulier une presse à grandes balles pour la confection de balles en forme de parallélépipède constituées de produits de récoltes agricoles, le procédé étant **caractérisé par** les étapes suivantes :
a) Mesure des poids (Gx) de chaque balle séparément (11) sur la section qui s'étend entre le dispositif de liage (12) et le départ de la presse-balloteuse ou d'une goulotte de chargement (17) disposée derrière son canal de compression (9),
b) Mesure de la longueur (Lx) de chaque balle pesée (11) avec un capteur de mesure (25) saisissant la longueur du déplacement sur la section située entre le dispositif de liage (12) et le départ de la presse-balloteuse ou d'une goulotte de chargement (17) disposée derrière son canal de compression (9),
c) Calcul des valeurs de la densité après compression (ζx) pour chaque balle séparément (11) par la formation d'un quotient à partir de son poids (Gx) et de son volume (Vx), qui est calculé à partir du produit de la section du canal de compression (9) et de la valeur de mesure pour sa longueur (Lx).

2. Procédé selon la revendication 1, **caractérisé en ce que** les densités après compression (ζx), pour chaque nouvelle balle formée (11) et/ou une valeur moyenne actuelle (ζx _{moyenne}), sont calculées pour toutes les balles formées (11) à partir d'un moment prédéterminé et amenées à un dispositif d'affichage (24).

3. Procédé selon la revendication 1, **caractérisé en ce que** les densités après compression (ζx) sont calculées pour des balles (11) sélectionnées par sondage et une valeur moyenne actuelle (ζx _{moyenne}) est formée à partir d'un moment prédéterminé et amenée à un dispositif d'affichage (24).

4. Procédé selon les revendications 1 à 3, **caractérisé par** les étapes de procédé suivantes :
a) Mesure continue des poids (Gx) agissant par l'intermédiaire des balles (11) sur la section finale (19) d'une goulotte de chargement (17) raccordée immédiatement à l'extrémité du canal de compression (9) au moyen d'un détecteur de poids (18) pendant leur avance sur la goulotte de chargement (17) jusqu'à son départ,
b) Amenée continue des valeurs de mesure des poids (Gx) sur un microprocesseur (23) pour le calcul et la mémorisation des valeurs moyennes (Mx) pour les poids (Gx),
c) Calcul et mémorisation des valeurs moyennes maximales (Mxₘₐₓ) en tant que mesure pour le poids réel de chaque balle (11) liée de manière définitive,
d) Mesure des longueurs (Lx) de chaque balle pesée (11) avec un capteur de mesure (25) détectant leur déplacement sur une goulotte de chargement (17) placée derrière le canal de compression (19) et amenée de ces valeurs de mesure à un microprocesseur (23),
e) Calcul des valeurs de la densité après compression (ζx) par le microprocesseur (23) pour chaque balle pesée (11) par la formation du quotient à partir de sa valeur moyenne maximale (Mxₘₐₓ) et de son volume (Vx), qui est calculé à partir du produit de la section du canal de compression (9) et de la valeur de mesure pour sa longueur (Lx).

5. Procédé selon les revendications 1 à 4, **caractérisé en ce que** les poids réels pour chaque balle (11) sont définis par au moins deux calculs exécutés l'un après l'autre et une mémorisation des valeurs de mesure (p. ex. Mx', Mx", Mx"') de même que de leur maxima (Mx'ₘₐₓ, Mx"ₘₐₓ, Mx'''ₘₐₓ).

6. Procédé selon les revendications 1 à 5, **caractérisé en ce que** les poids (Gx) sont mesurés directement sur le bord de basculement (16) dans le secteur final (19) de la goulotte de chargement (17).

7. Procédé selon les revendications 1 à 6, **caractérisé en ce que** le détecteur de poids (18) mesure les poids (Gx) dans la position de travail normale de la presse-balloteuse selon une orientation verticale en tant que poids réels (Gx) et qu'en cas d'écart de la presse-balloteuse par rapport à cette position de travail normale, un détecteur de position influence la conversion des valeurs de mesure ainsi faussées dans le microprocesseur (23) pour donner les poids réels (Gx).

8. Procédé selon les revendications 1 à 7, **caractérisé en ce que** la mesure des poids (Gx) agissant par l'intermédiaire de la balle (11) sur la section d'extrémité (19) de la glissière de chargement (17) est limitée dans le temps dans un domaine situé légèrement en avant et est exécutée après l'atteinte de la valeur moyenne maximale (Mxₘₐₓ).

9. Procédé selon les revendications 1 à 8, **caractérisé en ce que** les différentes valeurs moyennes maximales (Mxₘₐₓ) et/ou leur somme sont amenées, au cours d'une période à définir par l'opérateur, à un dispositif d'affichage (24).

10. Procédé selon les revendications 1 à 4, **caractérisé en ce que** les longueurs (Lx) de chaque balle séparément (11) et/ou leur somme sont amenées, au cours d'une période à déterminer par l'opérateur, à un dispositif d'affichage (24).

11. Dispositif pour la détermination de la densité après compression de balles dans une presse-balloteuse, en particulier une presse à grosses balles pour la confection de balles en forme de parallélépipède à partir de produits de récolte agricoles, **caractérisé en ce que**
a) dans la section d'extrémité (19) d'une goulotte de chargement (17) disposée à l'extrémité arrière du canal de compression (9) et représentant le prolongement de son fond, un détecteur de poids (18) mesurant les poids (Gx) des balles (11) qui se déplacent dans la position de dépose est disposé ;
b) le détecteur de poids (18) est relié à un microprocesseur qui calcule constamment les valeurs moyennes (Mx) à partir des poids (Mxₘₐₓ), mémorise ces valeurs moyennes (Mx) et détermine la valeur moyenne maximale Mxₘₐₓ) ;
c) un capteur de mesure (25) qui mesure le déplacement et donc la longueur (Lx) des balles (11) se déplaçant en position de dépose est disposé sur la goulotte de chargement (17), ledit capteur étant relié au microprocesseur (23) pour la transmission de ces valeurs de mesure ;
d) le microprocesseur (23) qui enregistre les valeurs de mesure du détecteur de poids (18) et du capteur de mesure (25) est également prévu pour le calcul des valeurs de la densité après compression (ζx) pour les balles pesées (11) par formation du quotient à partir de sa valeur moyenne maximale (Mxₘₐₓ) et du volume (Vx) correspondant, (Vx) étant le produit de la section du canal de compression (9) et de la valeur de mesure de la longueur (Lx) de la balle concernée (11).

12. Dispositif selon la revendication 11, **caractérisé en ce que** la section finale de la goulotte de chargement (17) est fixée à la goulotte de chargement (17) au moyen de poutres sollicitées en flexion (20) dotées d'extensomètres à résistance (22).

13. Dispositif selon les revendications 11 et 12, **caractérisé en ce que** la goulotte de chargement (17) a la forme d'une goulotte à rouleaux (14).

14. Dispositif selon les revendications 11 à 13, **caractérisé en ce que** la section finale (19) de la goulotte à rouleaux (14) est au moins occupée par un rouleau (15).

15. Dispositif selon les revendications 11 à 14, **caractérisé en ce que** le capteur de mesure (25) est disposé sur la goulotte de chargement (17) ou la goulotte à rouleaux (14) dans un secteur qui suit directement le fond du canal de compression (9).

16. Dispositif selon les revendications 11 à 14, **caractérisé en ce que** le capteur de mesure (25) est disposé dans la zone du bord de basculement (16) de la goulotte à rouleaux (14) ou de la goulotte de chargement (17).

17. Dispositif de mesure selon les revendications 11 à 16, **caractérisée en ce que** le capteur de mesure (25) est disposé concentriquement sur un rouleau (15) de la goulotte à rouleaux (14).

18. Dispositif de mesure selon les revendications 11 à 17, **caractérisé en ce que** sur la goulotte à rouleaux (14) ou la goulotte de chargement (17) au moins deux capteurs de mesure, disposés à distance l'un de l'autre et palpant les balles (11) sur leur largeur indépendamment les unes des autres, sont prévus.

19. Dispositif de mesure selon les revendications 11 à 18, **caractérisé en ce que** le capteur de mesure (24) est constitué d'une roule en étoile (26) et d'un disque compteur (27) qui sont reliés l'un à l'autre à calage de rotation.

20. Dispositif de mesure selon les revendications 11 à 19, **caractérisé en ce que** le disque compteur (27) présente des évidements (30) disposés uniformément sur sa périphérie et dont le nombre est supérieur au nombre de pointes (29) de la roue en étoile (26).

21. Dispositif de mesure selon les revendications 11 à 20, **caractérisé en ce que** un détecteur (31) à position fixe est disposé sur le disque compteur (27) dans la zone des évidements (30) pour le comptage des évidements (30).

22. Dispositif de mesure selon les revendications 11 à 21, **caractérisé en ce que** le capteur de mesure (25) est relié à un dispositif d'affichage (24) qui affiche la longueur de la balle (11) qui vient d'être déposée sur le champ et/ou la longueur réelle de la ligne de balles à partir d'un moment prédéterminable.
